(19) Europäisches Patentamt
European Patent Office
Office européen des brevets

(11) Veröffentlichungsnummer: **0 311 969 B1**

(12) **EUROPÄISCHE PATENTSCHRIFT**

(45) Veröffentlichungstag der Patentschrift: **05.01.94**

(51) Int. Cl.5: **C09B 19/02**

(21) Anmeldenummer: **88116838.9**

(22) Anmeldetag: **11.10.88**

# (54) Verfahren zur Herstellung von Triphendioxazinen.

(30) Priorität: **16.10.87 DE 3735057**

(43) Veröffentlichungstag der Anmeldung:
**19.04.89 Patentblatt 89/16**

(45) Bekanntmachung des Hinweises auf die Patenterteilung:
**05.01.94 Patentblatt 94/01**

(84) Benannte Vertragsstaaten:
**CH DE FR GB IT LI**

(56) Entgegenhaltungen:
**EP-A- 0 141 359**
**EP-A- 0 141 996**

(73) Patentinhaber: **BASF Aktiengesellschaft**
**Carl-Bosch-Strasse 38**
**D-67063 Ludwigshafen(DE)**

(72) Erfinder: **Nahr, Uwe, Dr.**
**In den Pfuetzen 19**
**D-6701 Dannstadt-Schauernheim(DE)**
Erfinder: **Patsch, Manfred, Dr.**
**Fritz-Wendel-Strasse 4**
**D-6706 Wachenheim(DE)**

EP 0 311 969 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Verfahren zur Herstellung von Triphendioxazinen durch Cyclisierung von Benzochinonderivaten in Oleum in Gegenwart einer organischen Iodverbindung.

Aus der EP-A-141 359 ist die Herstellung von Triphendioxazinverbindungen durch Umsetzung von 2,5-Diarylaminobenzochinonderivaten mit Oleum in Gegenwart von Iod oder einer anorganischen Iodverbindung bekannt. In dem dort beschriebenen Beispiel wird eine relativ hohe Menge an Kaliumiodid verwendet, nämlich 0,1 Mol, bezogen auf 1 Mol Benzochinonderivat. Außerdem ist die Anwesenheit von elementarem Iod zwingend, da auch die anorganischen Iodverbindungen unter den Reaktionsbedingungen in elementares Iod übergeführt werden.

Aufgabe der vorliegenden Erfindung war es, ein neues Verfahren zur Herstellung von Triphendioxazinen bereitzustellen, bei dem nur geringe Mengen an Katalysator notwendig sind und bei dem die Anwesenheit von elementarem Iod vermieden wird.

Es wurde nun gefunden, daß die Herstellung von Triphendioxazinen der Formel I

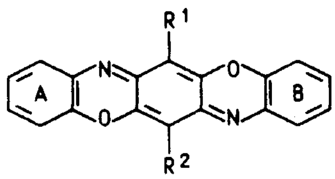

(I),

in der $R^1$ und $R^2$ gleich oder verschieden sind und unabhängig voneinander jeweils Wasserstoff, $C_1$-$C_4$-Alkyl, $C_1$-$C_4$-Alkoxy, Halogen, gegebenenfalls substituiertes Phenyl oder gegebenenfalls substituiertes Phenoxy bedeuten und die Ringe A und B gleich oder verschieden und unabhängig voneinander jeweils gegebenenfalls substituiert und/oder durch carbocyclische oder heterocyclische Ringe anelliert sind, durch Cyclisierung von Benzochinonen der Formel II

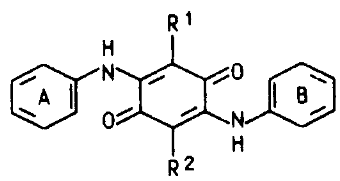

(II),

in der $R^1$, $R^2$ sowie die Ringe A und B jeweils die obengenannte Bedeutung besitzen, in Oleum als Reaktionsmedium vorteilhaft gelingt, wenn man die Cyclisierung in Gegenwart einer organischen Iodverbindung durchführt.

Alle in den obengenannten Formeln I und II auftretenden Alkylreste können sowohl geradkettig als auch verzweigt sein.

Für den Fall, daß in den obengenannten Formeln I und II substituierte Phenylreste auftreten, kommen als Substituenten z.B. $C_1$-$C_4$-Alkyl, $C_1$-$C_4$-Alkoxy, Amino, Hydroxysulfonyl oder Halogen in Betracht.

Für den Fall, daß die Ringe A und/oder B substituiert sind, kommen als Substituenten (im folgenden als $R^3$ bezeichnet) z.B. gegebenenfalls substituiertes $C_1$-$C_4$-Alkyl, $C_5$-$C_7$-Cycloalkyl, Phenyl, Benzyl, $C_1$-$C_4$-Alkoxy, $C_5$-$C_7$-Cycloalkoxy, gegebenenfalls substituiertes Phenoxy, Phenylthio, Amino, gegebenenfalls substituiertes $C_1$-$C_4$-Alkylamino, $C_5$-$C_7$-Cycloalkylamino, gegebenenfalls substituiertes Phenylamino, Benzylamino, $C_1$-$C_4$-Alkanoylamino, Halogen, Carboxy, Hydroxysulfonyl, Sulfamoyl oder 2-Sulfatoethylsulfonyl in Betracht.

Für den Fall, daß bei $R^3$ substituierte Phenylreste auftreten, kommen, zusätzlich zu den obengenannten Substituenten, z.B. Hydroxy, $C_1$-$C_4$-Mono- oder Dialkylamino, Carboxy, $C_1$-$C_4$-Alkanoylamino, Sulfato oder 2-Sulfatoethylsulfonyl in Betracht.

Die unter $R^3$ genannten Alkylreste können beispielsweise durch Amino, $C_1$-$C_4$-Mono- oder Dialkylamino, Hydroxy, $C_1$-$C_4$-Alkoxy, Hydroxysulfonyl, Carboxy, $C_1$-$C_4$-Alkanoylamino, Sulfato oder 2-Sulfatoethylsulfonyl substituiert sein.

Diejenigen Substituenten $R^3$, die über Sauerstoff oder Stickstoff an die Ringe A und/oder B gebunden sind, befinden sich dabei vorzugsweise in para-Stellung zum Stickstoffatom.

Reste $R^1$, $R^2$ und $R^3$ sind beispielsweise Methyl, Ethyl, Propyl, Isopropyl, Butyl, Isobutyl, sec-Butyl, Methoxy, Ethoxy, Propoxy, Isopropoxy, Butoxy, Isobutoxy, sec-Butoxy, Fluor, Chlor oder Brom.

Reste $R^1$ und $R^2$ sind weiterhin z.B. 4-Methylphenyl, 2,4-Dimethylphenyl, 2-Methoxyphenyl, 4-Ethoxyphenyl, 4-Isopropoxyphenyl, 4-Chlorphenyl, 4-Bromphenyl, 2,4-Dichlorphenyl, 2,6-Dichlorphenyl, 2-Methylphenoxy, 4-Methylphenoxy, 4-Methoxyphenoxy oder 4-Chlorphenoxy.

Reste $R^3$ sind weiterhin z.B. Cyclopentyl, Cyclohexyl, Cycloheptyl, Cyclopentyloxy, Cyclohexyloxy, Cycloheptyloxy, Phenoxy, 3-Aminophenoxy, 4-Aminophenoxy, Methylamino, Ethylamino, Propylamino, Isopropylamino, Butylamino, 2-Aminoethylamino, 3-Aminopropylamino, 3-Amino-2-methylpropylamino, 2-Hydroxyethylamino, 2-Hydroxysulfonylethylamino, 2-Sulfatoethylamino, Cyclopentylamino, Cyclohexylamino, Cycloheptylamino, Phenylamino, 3-Aminophenylamino, 4-Aminophenylamino, Formylamino, Acetylamino, Propionylamino, Butyrylamino oder Isobutyrylamino.

Wenn die Ringe A und/oder B durch carbocyclische oder heterocyclische Ringe anelliert sind, kommen dafür beispielsweise der Benzoring, das Indanringsystem oder das Indolringsystem als Ringe in Betracht, wobei diese Ringsysteme gegebenenfalls durch Amino, $C_1$-$C_4$-Mono- oder Dialkylamino, $C_1$-$C_4$-Alkoxy, Hydroxysulfonyl, Carboxy, $C_1$-$C_4$-Alkanoylamino oder 2-Sulfatoethylsulfonyl weiter substituiert sind.

Für das erfindungsgemäße Verfahren geeignete organische Iodverbindungen sind beispielsweise aliphatische Iodverbindungen, wie Methyliodid, Diiodmethan, Chloriodmethan, Iodoform, Tetraiodmethan, Ethyliodid, Ethyleniodid, 2-Iodethanol, Iodacetamid, Iodacetonitril, Trifluorethyliodid, Iodessigsäure und deren Salze, Iodessigsäureester (z.B. Iodessigsäurenitrophenylester), Propyliodid, Isopropyliodid, Allyliodid, 1,3-Diiodpropan, Butyliodid, Isobutyliodid, sec-Butyliodid, tert-Butyliodid, Perfluorbutyliodid, Iodmethyltrimethylsilan, 1-Iodpentan, 1-Iod-3-methylbutan, 2,2-Dimethyl-1-iodpropan, 1-Iodhexan oder 1,10-Diioddecan, oder aromatische Iodverbindungen, wie Iodbenzol, Iodtoluol, Iodphenol, Iodanisol, Iodanilin, Iodbenzoesäure oder Iodnaphthalin, wobei die aromatischen Ringsysteme gegebenenfalls noch weiter durch Halogen, $C_1$-$C_4$-Alkoxy, Nitro, Amino, Carboxy oder Hydroxylsulfonyl substituiert sind.

Bevorzugt verwendet man Iodoform, Iodbenzol oder deren Gemische als organische Iodverbindung.

Die organische Iodverbindung wird dabei in einer Menge von 0,0005 bis 0,1 Mol, vorzugsweise 0,0005 bis 0,01 Mol und insbesondere 0,001 bis 0,01 Mol, jeweils bezogen auf 1 Mol Benzochinon II, verwendet. Die organischen Iodverbindungen können selbstverständlich auch in Mengen verwendet werden, die größer sind als die hier angegebenen. Der Verfahrensablauf wird dadurch aber nicht weiter begünstigt.

Das erfindungsgemäße Verfahren wird bei einer Temperatur von 0 bis 50 °C, vorzugsweise 5 bis 25 °C in Oleum durchgeführt.

Vorteilhaft verwendet man dabei Oleum, das einen Gehalt von 2 bis 40 Gew.%, vorzugsweise 20 bis 40 Gew.% an Schwefeltrioxid aufweist.

Je Gewichtsteil zu cyclisierenden ßenzochinons II werden zweckmäßig 5 bis 20 Gewichtsteile, vorzugsweise 7 bis 12 Gewichtsteile Oleum eingesetzt.

Das erfindungsgemäße Verfahren wird zweckmäßig so durchgeführt, daß man zunächst Oleum vorlegt, dann, gegebenenfalls unter Kühlen, das Benzochinonderivat der Formel II und die organische Iodverbindung zugibt und danach das Gemisch über einen Zeitraum von etwa 0,5 bis 5 Stunden bei der obengenannten Temperatur rührt. Anschließend gibt man das Reaktionsgemisch vorsichtig auf Eis. Das entstandene Triphendioxazin der Formel I wird abgesaugt, mit Wasser gewaschen und getrocknet.

Eine bevorzugte Ausführungsform des erfindungsgemäßen Verfahrens besteht darin, die Cyclisierung in Gegenwart eines Oxidationsmittels durchzuführen. Als Oxidationsmittel kommen z.B. Sauerstoff oder Alkali- oder Ammoniumperoxodisulfat in Betracht. Die Verwendung von Sauerstoff, insbesondere in Form von trockener Luft ist bevorzugt. Verwendet man Luft als Oxidationsmittel, so wird diese während der Umsetzung in das Reaktionsgemisch geleitet. Verwendet man Alkali- oder Ammoniumperoxodisulfat als Oxidationsmittel, so setzt man dabei 0,001 bis 0,01 Mol, bezogen auf 1 Mol Ausgangsprodukt II, dem Reaktionsgemisch zu.

Die Vorteile des erfindungsgemäßen Verfahrens sind darin zu sehen, daß die Cyclisierungsreaktion zu einheitlichen Produkten führt und in sehr guten Ausbeuten abläuft, wobei nur geringe Mengen an organischer Iodverbindung benötigt werden. Die Anwesenheit von elementarem Iod wird dabei vermieden.

Die Triphendioxazine der Formel I sind wertvolle Zwischenprodukte für die Synthese von Reaktivfarbstoffen und Papierfarbstoffen.

Die folgenden Beispiele sollen die Erfindung näher erläutern, die dort genannten Prozente sind Gewichtsprozente.

Beispiel 1

19,05 g der Verbindung

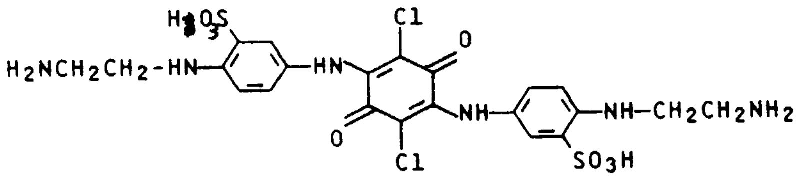

wurden bei 20 - 25 °C in eine Mischung aus 75,6 g 20 %igem Oleum und 59,0 g 65 %igem Oleum eingetragen. Nach Zugabe von 0,115 g Iodoform wurde 1 Stunde unter Kühlung bei 20 - 25 °C nachgerührt. Nach Beendigung der Reaktion (Dünnschichtchromatographie) wurde das Reaktionsgemisch auf 400 g Eis und 100 g Wasser gefällt und mit Natronlauge auf einen pH-Wert von 6 gestellt. Nach Absaugen und Trocknen erhielt man 18,5 g eines blauen Pulvers, das überwiegend die Verbindungen der Formel

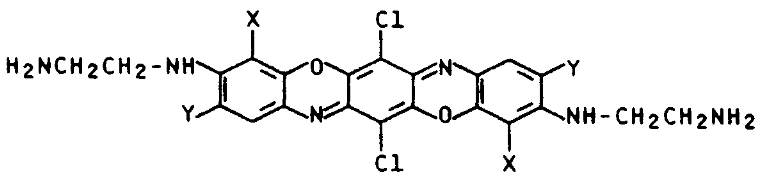

enthält, in der jeweils einer der Reste X und Y für Hydroxysulfonyl und der andere für Wasserstoff steht.

Beispiel 2

19,05 g der Verbindung

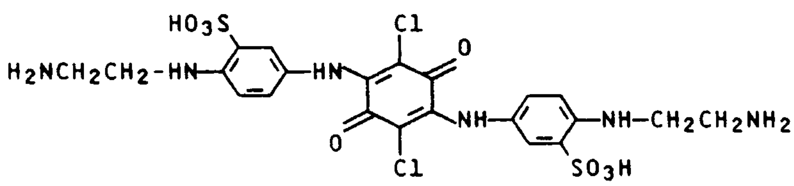

wurden bei 20 - 25 °C in eine Mischung aus 75,6 g 20 %igem Oleum und 59,0 g 60 %igem Oleum eingetragen. Nach Zugabe von 0,4 g Iodbenzol wurde 5 Stunden lang unter Durchleiten von trockener Luft nachgerührt. Nach Beendigung der Reaktion (Dünnschichtchromatographie) wurde das Reaktionsgemisch auf 400 g Eis und 100 g Wasser gefällt und mit Natronlauge auf einen pH-Wert von 6 gestellt. Nach Absaugen und Trocknen erhielt man 18,2 g eines blauen Pulvers, das überwiegend die Verbindungen der Formel

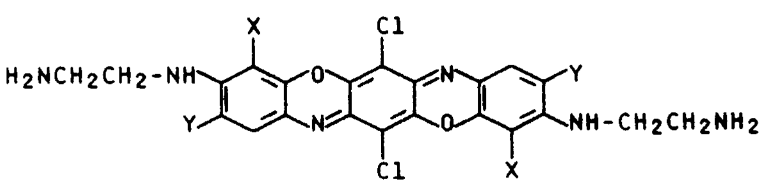

enthält, in der jeweils einer der Reste X und Y für Hydroxysulfonyl und der andere für Wasserstoff steht.

In analoger Weise werden die in der folgenden Tabelle aufgeführten Triphendioxazine der Formel

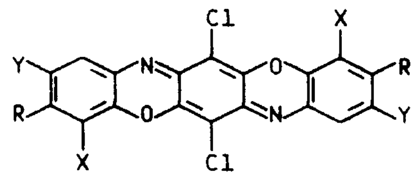

erhalten.

| Verb. Nr. | R | X, Y |
|---|---|---|
| 3 | 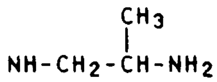 | $SO_3H$, H |
| 4 | $NH-(CH_2)_3-NH_2$ | $SO_3H$, H |
| 5 | 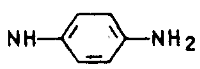 | $SO_3H$, H |
| 6 | $NH-(CH_2)_2-NH_2$ | $SO_2-(CH_2)_2-OSO_3H$, H |
| 7 | $NH-(CH_2)_2-SO_3H$ | $SO_2-(CH_2)_2-OSO_3H$, H |
| 8 | 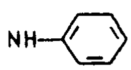 | $SO_2-(CH_2)_2-SO_3H$, H |
| 9 | $O-(CH_2)_2-NH_2$ | $SO_3H$, H |
| 10 | 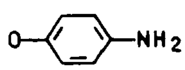 | $SO_3H$, H |

## Patentansprüche

**1.** Verfahren zur Herstellung von Triphendioxazinen der Formel I

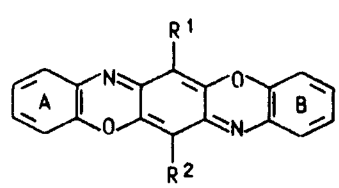

(I),

in der $R^1$ und $R^2$ gleich oder verschieden sind und unabhängig voneinander jeweils Wasserstoff, $C_1$-$C_4$-Alkyl, $C_1$-$C_4$-Alkoxy, Halogen, gegebenenfalls substituiertes Phenyl oder gegebenenfalls substituiertes Phenoxy bedeuten und die Ringe A und B gleich oder verschieden und unabhängig voneinander jeweils gegebenenfalls substituiert und/oder durch carbocyclische oder heterocyclische Ringe anelliert sind, durch Cyclisierung von Benzochinonen der Formel II

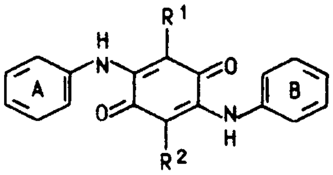

(II),

in der $R^1$, $R^2$ sowie die Ringe A und B jeweils die obengenannte Bedeutung besitzen, in Oleum als Reaktionsmedium, dadurch gekennzeichnet, daß man die Cyclisierung in Gegenwart einer organischen Iodverbindung durchführt.

2. Verfahren gemäß Anspruch 1, dadurch gekennzeichnet, daß man die Cyclisierung in Gegenwart von 0,0005 bis 0,1 Mol, bezogen auf 1 Mol Benzochinon der Formel II, einer organischen Iodverbindung durchführt.

3. Verfahren gemäß Anspruch 1, dadurch gekennzeichnet, daß man Iodoform, Iodbenzol oder deren Gemische als organische Iodverbindung verwendet.

4. Verfahren gemäß Anspruch 1, dadurch gekennzeichnet, daß man die Cyclisierung bei einer Temperatur von 0 bis 50 °C durchführt.

5. Verfahren gemäß Anspruch 1, dadurch gekennzeichnet, daß man die Cyclisierung in Gegenwart eines Oxidationsmittels durchführt.

## Claims

1. A process for preparing a triphendioxazine of the formula I

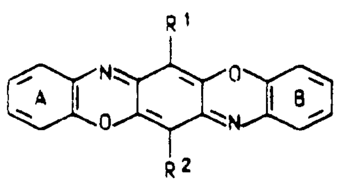

(I)

where $R^1$ and $R^2$ are identical or different and each is independently of the other hydrogen, $C_1$-$C_4$-alkyl, $C_1$-$C_4$-alkoxy, halogen, substituted or unsubstituted phenyl or substituted or unsubstituted phenoxy and the rings A and B are identical or different and each is independently of the other substituted or unsubstituted and/or fused with carbocyclic or heterocyclic rings, by cyclizing a benzoquinone of the formula II

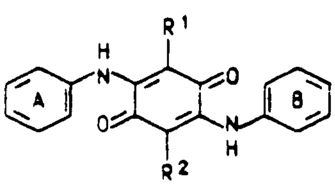

(II)

where $R^1$, $R^2$ and the rings A and B are each as defined above, in oleum as the reaction medium and in the presence of an organic iodine compound.

2. A process as claimed in claim 1, wherein the cyclization is carried out in the presence of from 0.0005 to 0.1 mole, based on 1 mole of benzoquinone of the formula II, of an organic iodine compound.

3. A process as claimed in claim 1, wherein iodoform, iodobenzene or a mixture thereof is used as the organic iodine compound.

4. A process as claimed in claim 1, wherein the cyclization is carried out at from 0 to 50°C.

5. A process as claimed in claim 1, wherein the cyclization is carried out in the presence of an oxidizing agent.

**Revendications**

1. Procédé de préparation de triphényldioxazines de formule I

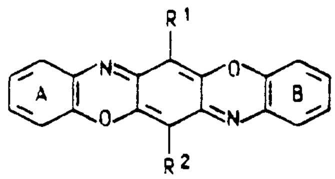

(I),

dans laquelle $R^1$ et $R^2$ sont identiques ou différents et représentent chacun, indépendamment l'un de l'autre, un atome d'hydrogène, un reste alkyle en $C_1$-$C_4$, alcoxy en $C_1$-$C_4$, un atome d'halogène ou un reste phényle éventuellement substitué ou phénoxy éventuellement substitué, et les noyaux A et B sont identiques ou différents et sont chacun, indépendamment l'un de l'autre, éventuellement substitués et/ou condensés avec des noyaux carbocycliques ou hétérocycliques, par cyclisation de benzoquinones de formule II

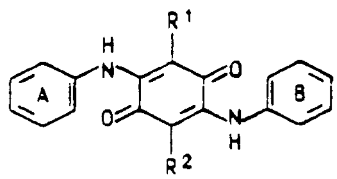

(II),

dans laquelle $R^1$, $R^2$, ainsi que les noyaux A et B ont les significations susmentionnées, dans de l'oléum servant de milieu réactionnel, caractérisé en ce qu'on conduit la cyclisation en présence d'un composé de l'iode organique,

2. Procédé selon la revendication 1, caractérisé en ce qu'on conduit la cyclisation en présence de 0,0005 à 0,1 mole d'un composé de l'iode organique, par rapport à 1 mole de benzoquinone de formule II.

3. Procédé selon la revendication 1, caractérisé en ce qu'on utilise, comme composé de l'iode organique, de l'iodoforme, de l'iodobenzène ou des mélanges de ceux-ci.

4. Procédé selon la revendication 1, caractérisé en ce qu'on conduit la cyclisation à une température de 0 à 50°C.

5. Procédé selon la revendication 1, caractérisé en ce qu'on conduit la cyclisation en présence d'un oxydant.